Europäisches Patentamt

European Patent Office

Office européen des brevets

(19)

(11) Publication number: **0 012 576**
**B1**

(12) **EUROPEAN PATENT SPECIFICATION**

(45) Date of publication of patent specification: **14.03.84**

(51) Int. Cl.³: **B 23 K 9/10,** G 05 F 1/08, G 05 F 1/56

(21) Application number: **79302814.3**

(22) Date of filing: **07.12.79**

(54) Coupling arrangement for a welding apparatus.

(30) Priority: **08.12.78 FI 783784**

(43) Date of publication of application:
**25.06.80 Bulletin 80/13**

(45) Publication of the grant of the patent:
**14.03.84 Bulletin 84/11**

(84) Designated Contracting States:
**DE FR GB IT SE**

(56) References cited:
**DE - A - 2 356 452**
**DE - A - 2 633 923**
**GB - A - 1 335 703**
**GB - A - 1 470 067**
**US - A - 3 549 978**
**US - A - 3 781 653**

(73) Proprietor: **KEMPPI OY**
**P.O. Box 233**
**SF-15801 Lahti 80 (FI)**

(72) Inventor: **Mäkimaa, Toivo Tapani**
**Okeroistentie 33**
**SF-15800 Lahti 80 (FI)**

(74) Representative: **Pike, Harold John et al,**
**Abel & Imray Northumberland House 303-306**
**High Holborn**
**London, WC1V 7LH (GB)**

Courier Press, Leamington Spa, England.

Coupling arrangement for a welding apparatus

The present invention relates to a coupling arrangement for a welding apparatus intended in particular for MIG-welding, the arrangement comprising a controllable direct-voltage source having a short reaction time.

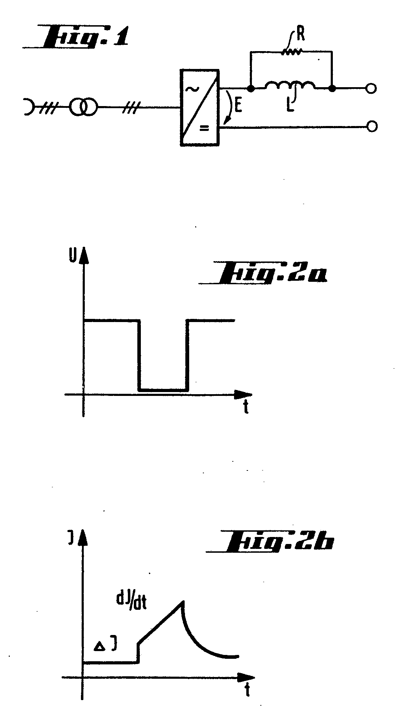

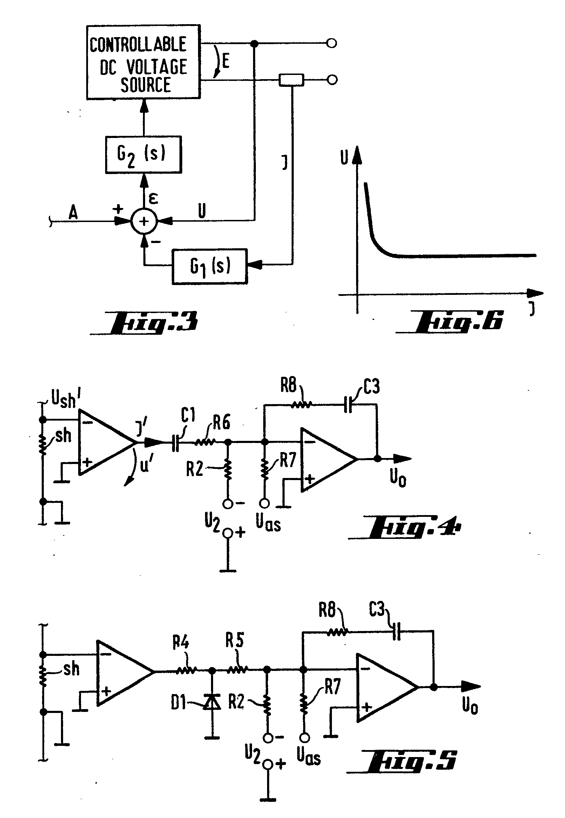

In previously known welding apparatus which operate with direct voltage, the desired welding characteristics are obtained by means of suitably selected coupling comprising the parallel interconnection of an inductance L and a resistance R, connected into the main current branch, as shown in accompanying Figure 1. In this case, in a drop short-circuit situation the voltage U taken by the load changes as shown in Figure 2a and the current I as shown in Figure 2B. The change in current at the initial moment of the drop short-circuit is, in this case, $\Delta I = E/R$, and the current increase rate $dI/dt = E/L$.

The welding characteristics of a welding apparatus are greatly dependent on these quantities, and various resistor-inductor combinations must be connected to the circuit in order to adjust the characteristics to different situations. Owing to the high currents, adjustment is difficult, and it is necessary to use large and expensive components. The quantity E is normally adjusted by means of a coil switch located on the primary side of the transformer, since phase control is not as such applicable to voltage control, with the exception of very narrow-range vernier control. The reason for this is the strong ripple caused by phase control, and for dynamic reasons this ripple cannot be eliminated by means of chokes.

It has also been proposed in GB—A—1 470 067 and US—A—3 549 978 to derive load current and load voltage signals and feed them back to control the firing times of thyristors used to rectify an a.c. supply so as to provide a steady load current over a range of load voltages and overcurrent protection when a short circuit appears at the load. In such arrangements once a thyristor has been switched on it remains conducting for the remainder of the half-cycle of the supply which means that the effective reaction time to control a thyristor circuit must be at least 10 ms. Such a reaction time is too long to control the current step which occurs during a short circuit so that a large and expensive adjustable inductor is still required for this purpose.

The object of the present invention is to overcome the above difficulties as far as possible.

Accordingly, the present invention provides a power supply coupling arrangement for a welding apparatus of a type suitable for MIG-welding which is operated in such a way that at certain times a short circuit appears at the load, which arrangement includes a controllable electrical power source capable of supplying the current taken by the load over a given load voltage range, a first electrical circuit that detects the current taken by the load and produces a corresponding first electrical signal, a second electrical circuit that detects the voltage applied to the load and produces a corresponding second electrical signal, and a third electrical circuit connected to receive the first and second electrical signals and produce a control signal for controlling the power source in response to the load current and load voltage in accordance with predetermined characteristics relating load current to load voltage, characterised in that the third electrical circuit includes an electrical circuit for influencing the control signal produced so that the required values of current step and current increase rate are obtained when the load is short circuited, and that the electrical power source includes a control circuit which is such that the reaction time of the control of the power source is of the order of a few hundreds of microseconds.

An embodiment of the present invention and other characteristics and advantages thereof will now be described in more detail with reference to the accompanying drawings in which:—

Figure 1 depicts a known coupling;

Figures 2a and 2b depict the contour of the voltage and current characteristics associated with the coupling shown in Figure 1;

Figure 3 shows diagrammatically the principle of a coupling arrangement according to the present invention;

Figures 4 and 5 depict sub-circuits of the coupling arrangement according to the present invention;

Figure 6 shows a particular characteristic of the circuit of Figure 5, and

Figure 7 depicts in block schematic form an embodiment of the present invention.

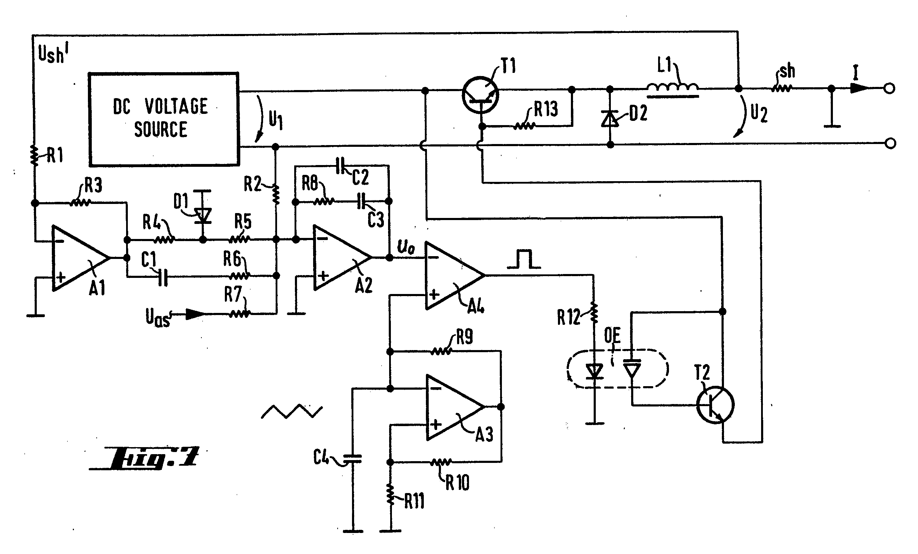

As stated above, the present invention aims to replace the resistor-choke combination, shown in Figure 1, by an electronic circuit, and in this case the block diagram of Figure 3 can be taken as the basis for a discussion of the control technique. In this block diagram, the transfer function $G_2(s)$ is assumed to be such that the control deviation $\varepsilon$ is zero with sufficient accuracy. In addition, the dynamic characteristics such as slowness of the direct-voltage source are assumed to be included in block $G_2(s)$. If the transfer characteristics of block $G_1(s)$ of Figure 3 are of the form

$$G(s) = \frac{sC}{1 + RCs},$$

where "s" is the complex frequency operator; assuming that R and C are constants, the relationships

$$\Delta I \sim R \quad \text{and} \quad dI/dt \sim 1/C$$

are obtained.

The set value A to be fed in as an input on the one hand determines E in an open circuit situation, and on the other hand scales the characteristic quantities $\Delta I$ and $dI/dt$ of a short-circuit situation.

A transfer function of the presented type

$$\frac{u'}{I'}(s)$$

can be obtained, for example, by means of a circuit as shown in Figure 4, in which an input voltage $U_{sh}$, proportional to the current of the load, is taken from across the shunt sh. In this case,

$U_{sh}{\sim}I$ = load current
$U_2$ = load voltage
$P{=}f(U_o)$ = power given by the controllable power source, in which case, the relationships

$$\Delta I{\sim}R6 \quad \text{and} \quad dI/dt{\sim}1/C1$$

are valid.

The controllable power source can be constructed using power semi-conductor components. The reaction time of the power source must, of course, be considerably shorter than the essential time constants of the process to be controlled. In MIG-welding this requires reaction times of a few hundred microseconds at the most, which can be achieved with relative ease when using today's electronic components.

When welding using low currents, it is necessary, for good results that the light arc must not be cut off between the occurrence of drop short-circuits. This is achieved, for example, by means of the control circuit coupling shown in Figure 5, in which the static voltage-current dependence illustrated in Figure 6 is obtained using a combination of resistors R2, R4, R5 and a diode D1. In it the resistors R4 and R5 determine the steepness of the curve in cases of low currents, whereas the voltage of the conductive state of the diode D1 (for example approximately 0.7 V), together with the resistors R5 and R2 and the set-value branch $U_{as}$-R7, determines the constant voltage in cases of higher currents.

In practice the circuits of Figure 4 and 5 can be combined as shown in Figure 7, which illustrates an example of the complete coupling of the present invention.

In the coupling shown in Figure 7, the controlled source of electric power consists of a direct-voltage source, a series transistor T1, a saturable choke L1, a diode D2, and a shunt sh intended for measuring the current. The transistor T1 is controlled by a pulse-width modulator, and the pulse width given by this modulator is controlled by a control circuit shown in previous Figures 4 and 5.

A voltage proportional to the load current is taken from across the shunt sh, via the resistor R1 to the input of an operational amplifier A1, and the amplifiers A1 and A2, with the components linked to them, correspond to the circuits shown in Figures 4 and 5. Next in succession to the amplifier A1 are coupled two branches in parallel, one of the branches being as shown in Figure 4 and providing the desired dynamic characteristics (Figure 2) and the other being as shown in Figure 5 and providing the desired static characteristics (Figure 6). The amplifier A2 functions both as the difference-forming element of the control circuit and, together with the components C2, C3 and R8, realises the desired dynamics. The circuit comprising the components C2, C3 and R8 does not actually affect the characteristic shown in Figure 2, but in practice the circuit has been found to be necessary in order to achieve sufficient stability for the control loop.

The pulse-width modulator is composed of operational amplifiers A3 and A4, of which A3 is a triangular-wave generator and A4 functions as a comparator, and the frequency of its rectangular-wave output is determined by the triangular-wave generator. The pulse width, or duty cycle, for its part is determined by the output of A2, which is also dependent on the set value $U_{as}$.

The pulse-like output of the comparator A4 is used for controlling a transistor T2, which for its part controls the series transistor T1 of the main current circuit in a manner known *per se*. An opto-isolator OE, for example, is used between the amplifier A4 and the base terminal of the transistor T2 in order to obtain galvanic isolation. The opto-isolator and the control circuit of the main transistor in general are shown greatly simplified in the figure. It must be noted, however, that all these circuits are very well known to an expert in the art and that they can be implemented in many different ways.

In the case illustrated, the most important component values and types can be as follows, for example:

R1 = 1 kΩ
R2 = 400 kΩ
R3 = 100 kΩ
R4 = 5 kΩ
R5 = 20 kΩ
R6 = 100 kΩ
R7 = 100 kΩ
R8 = 250 kΩ
R9 = 10 kΩ
R10 = 10 kΩ
R11 = 10 kΩ
R12 = 500 Ω
R13 = 10 Ω

L1 = 0.2 mH saturable

C1 = 10nF
C2 = 2nF

C3 = 50nF
C4 = 10nF

A1 = 741
A2 = 741
A3 = 715
A4 = 715

T1 = ESM 1000
T2 = BDY 58

## Claims

1. A power supply coupling arrangement for a welding apparatus of a type suitable for MIG-welding which is operated in such a way that at certain times a short circuit appears at the load, which arrangement includes a controllable electrical power source (T1, L1, D2, sh) capable of supplying the current taken by the load over a given load voltage range, a first electrical circuit (sh, .R1, A1) that detects the current (I) taken by the load and produces a corresponding first electrical signal, a second electrical circuit (R2) that detects the voltage (U2) applied to the load and produces a corresponding second electrical signal, and a third electrical circuit (A2, C1—3, D1, R4—8) connected to receive the first and second electrical signals and produce a control signal ($U_o$) for controlling the power source in response to the load current and load voltage in accordance with predetermined characteristics relating load current to load voltage, characterised in that the third electrical circuit (A2, C1—3, D1, R4—8) includes an electrical circuit (C1, R6) for influencing the control signal ($U_o$) produced so that the required values of current step ($\Delta I$) and current increase rate (dI/dt) are obtained when the load is short circuited, and that the electrical power source includes a control circuit (A3, A4, T1, T2, OE, R9—13, C4) which is such that the reaction time of the control of the power source is of the order of a few hundreds of microseconds.

2. A coupling arrangement according to claim 1, characterised in that the control circuit includes a series transistor (T1) through which electrical power is applied from the source to the load, and a width modulated pulse generator (A3, A4, R9—11, C4) connected to apply variable width pulses to control the conduction of the transistor (T1), the width of the pulses being controlled by the instantaneous value of the control signal ($U_o$).

3. A coupling arrangement according to claim 2 characterised in that the third electrical circuit includes a setting input for a setting signal ($U_{as}$) by means of which the characteristic values ($\Delta I$; dI/dt) of the welding operation for a short circuit at the load can be adjusted.

4. A coupling arrangement according to claim 3 characterised in that the third electrical circuit is such that the setting signal ($U_{as}$) also determines the voltage at the load when it is an open-circuit.

5. A coupling arrangement according to claim 3 or 4 characterised in that the said values of the current step $\Delta I$ and the current increase rate (dI/dt) are determined not only by the set value ($U_{as}$) but also by a resistor (R6) and a capacitor (C1), connected in series in the third electrical circuit, in which case $\Delta I \sim R6$ and dI/dt~1/C1.

6. A coupling arrangement according to claim 5 characterised in that in order to obtain the desired static characteristics, series connected resistors (R4 and R5) and a diode (D1) connected in shunt from the junction are provided in parallel with the said series coupling (R6, C1).

## Patentansprüche

1. Speisestromquelle für ein Schweißgerät eines Typs, der zum MIG-Schweißen geeignet ist, das derart ausgeführt wird, daß zu bestimmten Zeiten ein Kurzschluß an der Last auftritt, mit einer steuerbaren elektrischen Stromquelle (T1, L1, D2, sh), von der der von der Last aufgenommene Strom über einen gebenen Lastspannungsbereich lieferbar ist, einem ersten elektrischen Kreis (sh, R1, A1), der den von der Last aufgenommenen STrom (I) feststellt und ein entsprechendes erstes elektrisches Signal erzeugt, einem zweiten elektrischen Kreis (R2), der die an der Last anliegende Spannung (U2) feststellt und ein entsprechendes zweites elektrisches Signal erzeugt, und einem dritten elektrischen Kreis (A2, C1—3, D1, R4—8), der so geschaltet ist, daß er das erste und zweite elektrische Signal empfängt und ein Steuersignal ($U_o$) zum Steuern der Stromquelle in Abhängigkeit von dem Laststrom und der Lastspannung in Übereinstimmung mit vorbestimmten Charakteristiken bezüglich Laststrom und Lastspannung erzeugt, dadurch gekennzeichnet, daß der dritte elektrische Kreis (A2, C1—3, D1, R4—8) einen elektrischen Kreis (C1, R6) zum Beeinflussen des erzeugten Steuersignals ($U_o$) umfaßt, so daß die erforderlichen Werte für die Stromstufe ($\Delta I$) und die Stromanstiegsrate dI/dt erhalten werden, wenn die Last kurzgeschlossen ist, und daß die elektrische Stromquelle einen Steuerkreis (A3, A4, T1, T2, OE, R9—13, C4) umfaßt, die derart ausgebildet ist, daß die Reaktionszeit der Steuerung der Stromquelle in der Größenordnung von wenigen hundert Mikrosekunden ist.

2. Speisestromquelle nach Anspruch 1, dadurch gekennzeichnet, daß der Steuerkreis einen Reihentransistor (T1), durch den elektrische Leistung von der Quelle an die Last angelegt wird, und einen breitenmodulierten Impulsgenerator (A3, A4, R9—11, C4) umfaßt, der so geschaltet ist, daß Impulse variabler Breite angelegt werden, um die Leitfähigkeit des Transistors (T1) zu steuern, wobei die Breite der Impulse durch den augenblicklichen Wert des Steuersignals $U_o$) gesteuert wird.

3. Speisestromquelle nach Anspruch 2, dadurch gekennzeichnet, daß der dritte elektrische Kreis einen Stelleingang für ein Stellsignal ($U_{as}$) umfaßt, mit dem die charakteristischen Werte ($\Delta I$; dI/dt) des Schweißvorgangs für einen Kurzschluß der Last eingestellt werden können.

4. Speisestromquelle nach Anspruch 3, dadurch gekennzeichnet, daß der dritte elektrische Kreis derart ist, daß das Stellsignal ($U_{as}$) auch die Spannung an der Last bestimmt, wenn es ein offener Stromkreis ist.

5. Speisestromquelle nach Anspruch 3 oder 4, dadurch gekennzeichnet, daß die werte für die Stromstufe $\Delta I$ und die Stromanstiegsrate (dI/dt) nicht nur durch den Stellwert ($U_{as}$), sondern auch durch einen Widerstand (R6) und einen Kondensator (C1), die in dem dritten elektrischen Kreis in Reihe geschaltet sind, bestimmt werden, in welchem Fall $\Delta I \sim R6$ und $dI/dt \sim 1/C1$ ist.

6. Speisestromquelle nach Anspruch 5, dadurch gekennzeichnet, daß zum Erhalten der gewünschten statischen Charakteristiken in Reihe geschaltete Widerstände (R4 und R5) und eine Diode (D1), die im Nebenschluß von dem Verbindungspunkt geschaltet ist, in Parallelschaltung mit der Reihenkopplung (R6, C1) vorgesehen sind.

## Revendications

1. Dispositif de couplage pour alimentation en courant d'un appareil de soudage d'un type approprié pour un soudage MIG, qui est actionné d'une manière telle que, à certain moments, un court-circuit apparaisse dans la charge, ce dispositif comprenant une source de courant électrique pouvant être commandée (T1, L1, D2, sh) capable de fournir le courant consommé par la charge dans une gamme donnée de tensions de charge, un premier circuit électrique (sh, R1, A1) qui détecte le courant (I) consommé par la charge et qui produit un premier signal électrique correspondant, un second circuit électrique (R2) qui détecte la tension (U2) appliquée à la charge et qui produit un second signal électrique correspondant, et un troisième circuit électrique (A2, C1—3, D1, R4—8) connecté de manière à recevoir les premier et second signaux électriques et à produire un signal de commande ($U_o$) pour commander la source de courant en réponse au courant de charge et à la tension de charge en concordance avec des caractéristiques prédéterminées liant le courant de charge à la tension de charge, caractérisé en ce que le troisième circuit électrique (A2, C1—3, D1, R4—8) comprend un circuit électrique (C1, R6) pour agir sur le signal de commande ($U_o$) produit de manière que les valeurs nécessaires de l'échelon de courant ($\Delta I$) et du taxu d'augmentation de courant (dI/dt) soient obtenues quand la charge est court-circuitée, et en ce que la source de courant électrique comprend un circuit de commande (A3, A4, T1, T2, OE, R9—13, C4) qui est tel que le temps de réaction de la commande de la source de courant soit de l'ordre de quelques centièmes de microseconde.

2. Dispositif de couplage selon la revendication 1, caractérisé en ce que le circuit de commande comprend un transistor-série (T1) par l'intermédiaire duquel du courant électrique est appliqué de la source à la charge, et un générateur d'impulsions modulées en largeur (A3, A4, R9—11, C4) connecté de manière à appliquer des impulsions de largeur variable pour commander la conduction du transistor (T1), la largeur des impulsions étant commandée par la valeur instantanée du signal de commande ($U_o$).

3. Dispositif de couplage selon la revendication 2, caractérisé en ce que le troisième circuit électrique comprend une entrée de réglage d'un signal de réglage ($U_{as}$) au moyen duquel les valeurs caractéristiques ($\Delta I$; dI/dt) de l'opération de soudage pour un court-circuit dans la charge puissent être réglées.

4. Dispositif de couplage selon la revendication 3, caractérisé en ce que le troisième circuit électrique est tel que le signal de réglage ($U_{as}$) détermine également la tension dans la charge lorsqu'elle est en circuit ouvert.

5. Dispositif de couplage selon la revendication 3 ou 4, caractérisé en ce que lesdites valeurs de l'échelon de courant ($\Delta I$) et du taux d'augmentation de courant (dI/dt) sont déterminées non seulement par la valeur de réglage ($U_{as}$) mais également par une résistance (R6) et un condensateur (C1), connectés en série dans le troisième circuit électrique, auquel cas $\Delta I \sim R6$ et $dI/dt \sim 1/C1$.

6. Dispositif de couplage selon la revendication 5, caractérisé en ce que, pour obtenir les caractéristiques statiques désirées, des résistances connectées en série (R4 et R5) et une diode (D1) connectée en shunt à partir de la jonction sont disposées en parallèle avec ledit couplage-série (R6, C1).

**Fig. 1**

**Fig. 2a**

**Fig. 2b**

Fig.3

Fig.6

Fig.4

Fig.5

2

Fig.1